# EUROPEAN PATENT APPLICATION

(11) **EP 4 517 452 A1**
(43) Date of publication of application: **05.03.2025**
(21) Application number: 22947667.6
(22) Date of filing: 18.10.2022
(51) Int. Cl.: G05B 13/04

(54) **DOMAIN CONTROLLER AND ENERGY STORAGE SYSTEM**

(30) Priority: 21.06.2022 WO PCT/CN2022/100146
(71) Applicant: Contemporary Amperex Technology Co., Limited, Ningde, Fujian 352100 (CN)
(72) Inventor: ZUO, Xiyang, Ningde, Fujian 352100 (CN); LI, Zhonghong, Ningde, Fujian 352100 (CN); WU, Kai, Ningde, Fujian 352100 (CN); XU, Jinmei, Ningde, Fujian 352100 (CN); LUO, Guangsheng, Ningde, Fujian 352100 (CN); ZHANG, Xuefang, Ningde, Fujian 352100 (CN)
(74) Representative: Gong, Jinping
(86) International application number: PCT/CN2022/126015
(87) International publication number: WO 2023/245930

(57) **Abstract**

Provided are a domain controller (203) and an energy storage system (200). The domain controller (203) is applied to the energy storage system (200). The energy storage system (200) comprises an energy storage unit (201) and a non-energy storage unit (202); the non-energy storage unit (202) comprises a thermal management unit and a fire-fighting unit; the non-energy storage unit (202) is used for assisting the energy storage unit (201); the domain controller (200) integrates a management module (2011) of the energy storage unit (201) and a management module (2021) of the non-energy storage unit (202), and is used for managing the non-energy storage unit (202) according to state information of the energy storage unit (201). A management policy of the energy storage system (200) can be reasonably adjusted, and efficient energy-saving management of the energy storage system (200) is realized.

## Description

### CROSS-REFERENCE TO RELATED APPLICATIONS

This application claims the priority to PCT Patent Application Ser. No. PCT/CN2022/100146 "Domain Controller, Energy Storage System and Control Method of Energy Storage System" filed June 21, 2022, the contents of which are incorporated herein by reference.

### TECHNICAL FIELD

The present application relates to the technical field of energy storage, in particular to a domain controller and an energy storage system.

### BACKGROUND

Based on the background of national power reform and the large increase in the installed renewable energy generation capacity, the energy storage technology will play an important role in five links of power generation, transmission, transformation, distribution and utilization of a power system. A battery energy storage system is more and more widely used in new energy, smart grids, energy-saving technologies and other fields.

With the development of the energy storage industry, the properties such as the working efficiency, safety performance and cycle life of the battery energy storage system are in the spotlight. How to manage the battery energy storage system reasonably and improve the properties of the battery energy storage system is an urgent problem to be solved at present.

### SUMMARY

The present application provides a domain controller and an energy storage system, through which management strategies of the energy storage system can be reasonably adjusted to achieve effective and energy-saving management of the energy storage system.

A first aspect provides a domain controller for the energy storage system. The energy storage system includes an energy storage unit and a non-energy storage unit. The non-energy storage unit includes a heat management unit and a fire-fighting unit. The non-energy storage unit is configured to assist the energy storage unit. The domain controller integrates an energy storage unit management module and a non-energy storage unit management module and is configured to manage the non-energy storage unit according to state information of the energy storage unit.

In the embodiment of the present application, the energy storage unit management module and the non-energy storage unit management module are integrated into the domain controller. Compared with an existing solution that an energy storage unit management module and a non-energy storage unit management module of an energy storage system are arranged in a decentralized manner, the solution of the present application that the energy storage unit management module and the non-energy storage unit management module are integrated into the domain controller has the advantages that centralized control of the energy storage unit management module and the non-energy storage unit management module can be realized through the domain controller so that the information exchange between the energy storage unit management module and the non-energy storage unit management module is smooth and fast, the system management efficiency is improved, and information of the energy storage unit management module and information of the non-energy storage unit management module can be integrated and processed to avoid wasting of system resources caused by repeated information processing. Particularly, after a fire-fighting unit management module and the energy storage unit management module are integrated into the domain controller, the fire-fighting unit can acquire the state information of the energy storage unit in time, and the domain controller adjusts and controls the operating state of the energy storage unit in time to ensure the security of the energy storage system. In addition, the non-energy storage unit is managed according to the state information of the energy storage unit, i.e., the operating state of the non-energy storage unit is adjusted reasonably according to actual operation demands of the energy storage unit to save the operating cost of the non-energy storage unit.

In one possible implementation, the state information includes at least one of temperature information, voltage, insulation resistance value, State of Charge (SOC) and State of Health (SOH) of the energy storage unit of the energy storage system.

The temperature information, the voltage, the insulation resistance value, the SOC and the SOH of the energy storage unit are all state information related to the operating state of the energy storage unit. A real-time operating condition of the energy storage unit can be learned by acquiring the state information of the energy storage unit.

In one possible implementation, the energy storage unit management module includes a battery management system (BMS) and/or an energy management system (EMS).

The BMS and the EMS can implement management and control of the whole battery energy storage system according to the state information of the energy storage unit.

In one possible implementation, the temperature information includes a temperature rise rate of the energy storage unit.

The temperature rise rate of the energy storage unit is the state information reflecting temperature variations of the energy storage unit in an operating state. Whether the energy storage unit has a risk of thermal runaway or not can be judged according to the temperature rise rate of the energy storage unit, the operating state of the non-energy storage unit is adjusted accordingly, and safe operation of the energy storage system is guaranteed.

In one possible implementation, the domain controller is configured to determine the operating mode of the heat management unit according to the temperature rise rate of the energy storage unit.

The operating mode of the heat management unit is determined according to the temperature rise rate of the energy storage unit, i.e., the operating state of the heat management unit is adjusted reasonably according to the temperature rise rate of the energy storage unit to enable the energy storage unit to be in an appropriate operating condition and ensure efficient and safe operation of the energy storage system.

In one possible implementation, the domain controller is configured to determine the operating mode of the fire-fighting unit according to the temperature rise rate of the energy storage unit and the operating mode of the heat management unit.

The heat management unit adjusts the operating state of its own according to the temperature rise rate of the energy storage unit. When the heat management unit reaches a limit of adjusting the operating condition of the energy storage unit and the energy storage unit is not yet in the appropriate operating condition and even has a risk of thermal runaway, the fire-fighting unit changes the operating mode to take part in adjusting the operating condition of the energy storage unit to protect the energy storage system against safety problems such as thermal runaway.

In one possible implementation, the domain controller is configured to: judge whether the temperature rise rate of the energy storage unit is not less than the second threshold or not in the case that the temperature rise rate of the energy storage unit is not less than the first threshold and lasts a certain period of time, the second threshold being greater than the first threshold; and determine the operating mode of the heat management unit to be a full power refrigeration mode in the case that the temperature rise rate of the energy storage unit is not less than the second threshold.

In the case that the temperature rise rate of the energy storage unit continues to rise and is not less than the second threshold after the temperature rise rate of the energy storage unit is not less than the first threshold and lasts a certain period of time, the heat management unit is determined to operate in the full power refrigeration mode to conduct cooling on the energy storage unit fully to protect the energy storage system against thermal runaway.

In one possible implementation, the domain controller is configured to determine the operating mode of the fire-fighting unit to be a turn-off mode in the case that the operating mode of the heat management unit is the full power refrigeration mode and the temperature rise rate of the energy storage unit is less than a third threshold, and the third threshold is greater than the second threshold.

When the temperature rise rate of the energy storage unit continues to rise but does not exceed the third threshold after the heat management unit conducts cooling on the energy storage unit in the full power refrigeration mode, the fire-fighting unit is determined to be in the turn-off mode and does not take part in temperature adjustment on the energy storage unit, and the heat management unit continues to conduct cooling on the energy storage unit in the full power refrigeration mode. In this way, in the case that the heat management unit can effectively adjust the temperature of the energy storage unit, the energy storage unit can be protected against irreversible performance damage caused by unnecessarily starting the fire control system without starting the fire-fighting unit.

In one possible implementation, the domain controller is configured to determine the operating mode of the fire-fighting unit to be a turn-on mode in the case that the operating mode of the heat management unit is the full power refrigeration mode and the temperature rise rate of the energy storage unit is not less than a third threshold, and the third threshold is greater than the second threshold.

When the heat management unit conducts cooling on the energy storage unit in the full power refrigeration mode and the temperature rise rate of the energy storage unit continues to rise and exceeds the third threshold, i.e., when the heat management unit operates in the full power refrigeration mode and still cannot effectively control the temperature rise rate of the energy storage unit, the fire control system is determined to be in the turn-on mode and takes part in adjusting the temperature of the energy storage unit to protect the energy storage system against thermal runaway and safety problems.

A second aspect provides an energy storage system, including: an energy storage unit; a non-energy storage unit which includes a heat management unit and a fire-fighting unit and is configured to assist the energy storage unit; and a domain controller integrating an energy storage unit management module and a non-energy storage unit management module and configured to manage the non-energy storage unit according to state information of the energy storage unit.

In one possible implementation, the state information includes at least one of temperature information, voltage, insulation resistance value, state of charge (SOC) and state of health (SOH) of the energy storage unit of the energy storage system.

In one possible implementation, the energy storage unit management module includes a battery management system (BMS) and/or an energy management system (EMS).

In one possible implementation, the temperature information includes a temperature rise rate of the energy storage unit.

In one possible implementation, the domain controller is configured to determine the operating mode of the heat management unit according to the temperature rise rate of the energy storage unit.

In one possible implementation, the domain controller is configured to determine the operating mode of the fire-fighting unit according to the temperature rise rate of the energy storage unit and the operating mode of the heat management unit.

In one possible implementation, the domain controller is configured to: judge whether the temperature rise rate of the energy storage unit is not less than the second threshold or not in the case that the temperature rise rate of the energy storage unit is not less than the first threshold and lasts a certain period of time, the second threshold being greater than the first threshold; and determine the operating mode of the heat management unit to be a full power refrigeration mode in the case that the temperature rise rate of the energy storage unit is not less than the second threshold.

In one possible implementation, the domain controller is configured to determine the operating mode of the fire-fighting unit to be a turn-off mode in the case that the operating mode of the heat management unit is a full power refrigeration mode and the temperature rise rate of the energy storage unit is less than a third threshold, and the third threshold is greater than the second threshold.

In one possible implementation, the domain controller is configured to determine the operating mode of the fire-fighting unit to be a turn-on mode in the case that the operating mode of the heat management unit is a full power refrigeration mode and the temperature rise rate of the energy storage unit is not less than a third threshold, and the third threshold is greater than the second threshold.

The present application provides a domain controller for an energy storage system. The domain controller integrates an energy storage unit management module and a non-energy storage unit management module. Compared with an existing solution that an energy storage unit management module and a non-energy storage unit management module of an energy storage system are arranged separately, the solution of the present application that the energy storage unit management module and the non-energy storage unit management module are integrated into the domain controller has the advantages that centralized control of the energy storage unit management module and the non-energy storage unit management module can be realized through the domain controller so that the information exchange between the energy storage unit management module and the non-energy storage unit management module is smooth and fast, the system management efficiency is improved, and information of the energy storage unit management module and information of the non-energy storage unit management module can be integrated and processed to avoid wasting of system resources caused by repeated information processing. Particularly, after the fire-fighting unit management module and the energy storage unit management module are integrated into the domain controller, the fire-fighting unit can acquire the state information of the energy storage unit in time, and the domain controller adjusts and controls the operating state of the energy storage unit in time to ensure the security of the energy storage system. In addition, the non-energy storage unit is managed according to the state information of the energy storage unit, i.e., the operating state of the non-energy storage unit is adjusted reasonably according to actual operation demands of the energy storage unit to save the operating cost of the non-energy storage unit.

### DESCRIPTION OF THE DRAWINGS

To more clearly illustrate the technical solutions of the embodiments of the present application, the accompanying drawings required by the embodiments of the present application are introduced briefly below. Apparently, the accompanying drawings depicted below are merely some examples of the present application, for those skilled in the art, they can also obtain other accompanying drawings based on the accompanying drawings without paying creative work.
FIG. 1 is a schematic diagram of an energy storage system disclosed in one embodiment of the present application;
FIG. 2 is a schematic diagram of the energy storage system disclosed in one embodiment of the present application;
FIG. 3 is a schematic diagram of the energy storage system disclosed in one embodiment of the present application.

### DESCRIPTION OF EMBODIMENTS

Implementations of the present application are described in further detail below in conjunction with the accompanying drawings and embodiments. The following detailed description of the embodiments and the accompanying drawings are used to illustrate the principles of the present application but are not intended to limit the scope of the present application, i.e., the present application is not limited to the described embodiments.

In the description of the present application, it should be noted that, unless otherwise noted, "a plurality of" means two or more; orientation o positional relationships indicated by the terms "upper", "lower", "left", "right", "inner", "outer", and the like are only for convenience of description of the present application and simplification of description rather than indicating or implying that the referenced device or element must have a particular orientation, be constructed and operated in a particular orientation, and thus are not to be construed as limiting the present application. In addition, the terms "first", "second", "third", and the like are used for descriptive purposes only and are not to be construed as indicating or implying relative importance. "vertical" is not strictly vertical, but within the allowable range of error. "parallel" is not strictly parallel, but within the allowable range of error.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it may be "fixedly connected" or "detachably connected", or "integrally connected"; and it can be "directly connected" or "indirectly connected through an intermediate medium". The specific meanings of the above terms in the present application may be understood by those of ordinary skill in the art depending on specific circumstances.

The term "and/or" in the present application is simply a description of the association relationship of the associated objects, indicating that there may be three relationships, for example, A and/or B may indicate that A exists alone, A and B exist at the same time, and B exists alone. In addition, the character "/" in the present application generally indicates an alternative relationship between the front and back associated objects.

Based on the background of the national power reform and the large increase in the installed renewable energy generation capacity, the energy storage technology will play an important role in five links of power generation, transmission, transformation, distribution and utilization of the power system. The battery energy storage system is more and more widely used in new energy, smart grids, energy-saving technologies and other fields.

The battery energy storage system, which achieves the functions of electric energy storage, peak-load shifting, and stabilization of fluctuation of new energy output in a distributed power generation and a microgrid system, is an essential link in the system. With the continuous development of energy storage technology and the strong support of batteries and new energy technologies from all over the world, more and more large-scale battery energy storage system devices have been developed and applied.

With the development of the energy storage industry, the properties such as the working efficiency, safety performance and cycle life of the battery energy storage system are in the spotlight. The properties of the battery energy storage system are closely linked to the management of the battery energy storage system. By managing the battery energy storage system reasonably, the properties of the battery energy storage system can be effectively improved while the operating cost of the battery energy storage system is saved.

For example, in an existing battery energy storage system, a heat management unit and a fire-fighting unit operate independently of each other, and the fire-fighting unit usually starts an operating mode with the help of triggering a temperature sensor or a smoke sensor. The battery energy storage system includes a plurality of batteries, and the temperature sensor or the smoke sensor can be triggered just when the overall temperature of the energy storage system reaches a certain value or the smoke concentration of the energy storage system reaches a certain value. As a result, when thermal runaway occurs to an individual battery in the energy storage system far away from the temperature sensor or the smoke sensor, the temperature sensor or the smoke sensor will not be triggered, and the fire control system will not start, which leads to thermal runaway of the energy storage system.

In view of this, the embodiments of the present application provide the domain controller for the energy storage system. The domain controller integrates the energy storage unit management module and the non-energy storage unit management module. Compared with the existing solution that the energy storage unit management module and the non-energy storage unit management module of the energy storage system are arranged separately, the solution of the present application that the energy storage unit management module and the non-energy storage unit management module are integrated into the domain controller has the advantages that centralized control of the energy storage unit management module and the non-energy storage unit management module can be realized through the domain controller so that the information exchange between the energy storage unit management module and the non-energy storage unit management module is smooth and fast, the system management efficiency is improved, and information of the energy storage unit management module and information of the non-energy storage unit management module can be integrated and processed to avoid wasting of system resources caused by repeated information processing. Particularly, after the fire-fighting unit management module and the energy storage unit management module are integrated into the domain controller, the fire-fighting unit can acquire the state information of the energy storage unit in time, and the domain controller adjusts and controls the operating state of the energy storage unit in time to solve the problem that thermal runaway of batteries cannot be controlled in time because the operating mode of the fire-fighting unit can only be started by triggering the temperature sensor or the smoke sensor. The security of the energy storage system is improved. In addition, the non-energy storage unit is managed according to the state information of the energy storage unit, i.e., the operating state of the non-energy storage unit is adjusted reasonably according to actual operation demands of the energy storage unit to save the operating cost of the non-energy storage unit.

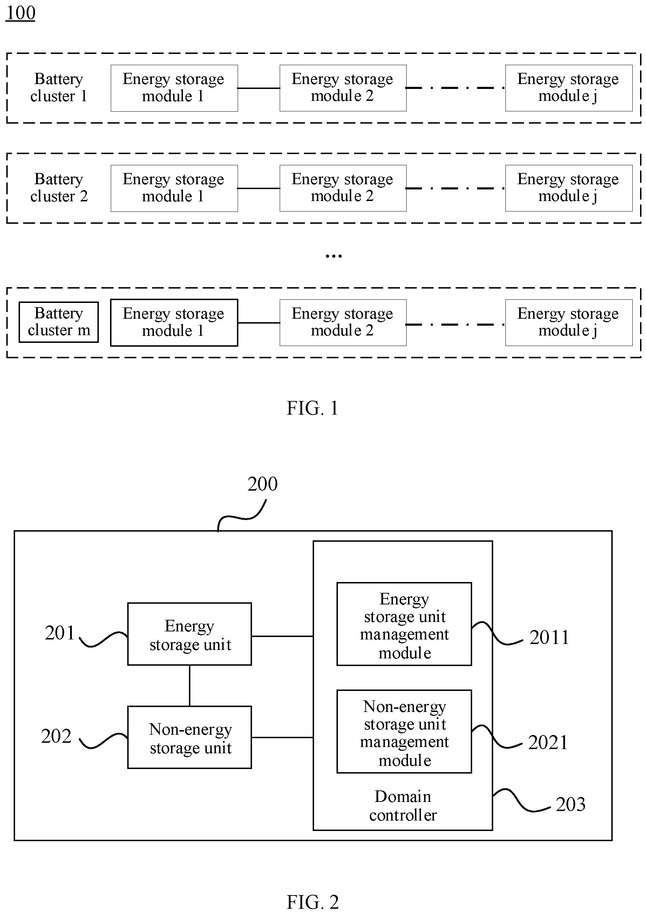

FIG. 1 is a schematic diagram of an energy storage system 100 provided in the present application.

The energy storage system 100 includes a plurality of battery clusters, namely the battery cluster 1 to the battery cluster m shown in FIG. 1, wherein m may be a natural number greater than 1, i.e., the number of the battery clusters can be flexibly adjusted according to the energy storage capacity in practical application; if the energy storage capacity is large, the number of the battery clusters can be set properly to be larger; and if the energy storage capacity is small, the number of the battery clusters can be reduced properly.

Each battery cluster includes at least two battery energy storage systems (ESS) connected in series, namely ESS 1 to ESS j shown in FIG. 1, wherein j may be a natural number greater than or equal to 2. Each ESS includes a plurality of energy storage elements connected in series or in parallel to form a minimum energy storage and management unit. To achieve detection and control of the energy storage system, a battery management system (BMS) will be designed in each of the energy storage systems and the battery clusters to monitor battery information of a battery such as state of charge (SOC), temperature and current and perform real-time information exchange with an upper energy management system (EMS) or a power convert system (PCS) so as to manage and control the whole battery energy storage system.

The battery management system (BMS), the energy management system (EMS) and the power convert system (PCS) of the above-mentioned energy storage system are usually designed in a decentralized manner in the energy storage system, and there are some problems such as delay in information exchange and poor communication between the systems.

The present application provides a domain controller for an energy storage system, and the energy storage system may be the energy storage system 100 in FIG. 1.

As shown in FIG. 2, the energy storage system 200 includes an energy storage unit 201 and a non-energy storage unit 202, and the non-energy storage unit 202 is configured to assist the energy storage unit 201. The non-energy storage unit 202 includes a heat management unit and a fire-fighting unit. The heat management unit conducts cooling on a battery pack of the energy storage unit when the temperature of the battery pack of the energy storage unit 201 is too high and conducts heating on the battery pack when the battery pack needs to be heated to raise the charging and discharging speed. The fire-fighting unit can conduct fire control and fire extinguishing in case of thermal runaway of the battery energy storage system.

A domain controller 203 integrates an energy storage unit management module 2011 and a non-energy storage unit management module 2021 and is configured to manage the non-energy storage unit 202 according to state information of the energy storage unit 201.

Temperature information of batteries is important state information reflecting the operating state of the batteries. The temperature of the batteries is a key factor influencing the aging of the batteries. A proper operating temperature can slow aging of the batteries and present optimal performance of the batteries. Thus, the non-energy storage unit 202 is managed according to the temperature information of the batteries to enable the batteries to be in an appropriate operating temperature to help improve the performance of the batteries and ensure that the energy storage system can operate efficiently and safely.

In the embodiment of the present application, the energy storage unit management module 2011 and the non-energy storage unit management module 2021 are integrated into the domain controller 203. Compared with the existing solution that the energy storage unit management module 2011 and the non-energy storage unit management module 2021 of the energy storage system 200 are arranged in a decentralized manner, the solution of the present application that the energy storage unit management module 2011 and the non-energy storage unit management module 2021 are integrated into the domain controller 203 has the advantages that centralized control of the energy storage unit management module 2011 and the non-energy storage unit management module 2021 can be realized through the domain controller 203 so that the information exchange between the energy storage unit management module 2011 and the non-energy storage unit management module 2021 is smooth and fast, the system management efficiency is improved, and information of the energy storage unit management module 2011 and information of the non-energy storage unit management module 2021 can be integrated and processed to avoid wasting of system resources caused by repeated information processing. Particularly, after a fire-fighting unit management module 2021 and the energy storage unit management module are 2011 integrated into the domain controller 203, the fire-fighting unit can acquire the state information of the energy storage unit 201 in time, and the domain controller 203 adjusts and controls the operating state of the energy storage unit in time to ensure the security of the energy storage system 200. In addition, the non-energy storage unit 202 is managed according to the state information of the energy storage unit 201, i.e., the operating state of the non-energy storage unit 202 is adjusted reasonably according to actual operation demands of the energy storage unit 201 to save the operating cost of the non-energy storage unit 202.

Optionally, in the embodiment of the present application, the state information of the energy storage system includes at least one of temperature information, voltage, insulation resistance value, state of charge (SOC) and state of health (SOH) of the energy storage unit of the energy storage system.

The temperature of the battery is a key factor influencing the aging of the battery. A proper operating temperature can slow the aging of the battery and meanwhile present optimal performance of the battery. Thus, the temperature of the battery needs to be monitored in real time to make sure that the battery maintains the proper operating temperature by adjusting the operating mode of the heat management unit. When the temperature of the battery rises abnormally, the temperature of the battery can be lowered through the fire control system.

Insulation resistance of the battery refers to a thermistor with a negative temperature coefficient, of which resistance decreases as temperature rises in an exponential relationship. A resistance value of the thermistor decreases as the temperature rises.

The state of charge (SOC) of a battery is a physical quantity configured to reflect the remaining capacity of the battery, which represents the ratio of the remaining capacity of the battery after being used for a period of time or not being used for a long time to the capacity in the fully charged state.

The state of health (SOH) of the battery is a quality factor compared with its ideal state. Usually, the state of health (SOH) of the battery decreases with the increase of service time and usage counts. Usually, the changes of electrical parameters such as internal resistance, capacity, voltage, self-discharge speed, charging ability and number of charge and discharge cycles are used to determine the state of health (SOH) of the battery.

It should be understood that the state information described above is merely an illustrative example without any limitation to the present application. The state information in the embodiment of the present application may include any one of the state information described above but is not limited to the above-mentioned state information.

The temperature information, the voltage, the insulation resistance value, the SOC and the SOH of the energy storage unit are all state information related to the operating state of the energy storage unit. A real-time operating condition of the energy storage unit can be learned by acquiring the state information of the energy storage unit.

Optionally, in one possible implementation, the energy storage unit 201 management module 2011 includes a battery management system (BMS) and/or an energy management system (EMS).

The battery management system (BMS) is in information exchange with the energy management system (EMS) by monitoring the state information of the battery such as SOC, temperature and current to realize management and control of the whole battery energy storage system. For example, the battery management system (BMS) ensures that the SOC is maintained within a reasonable range by estimating the state of charge (SOC) of the battery to prevent damage to the battery due to overcharge or overdischarge. In the process of battery charging and discharging, the battery management system (BMS) collects terminal voltage and temperature of each battery in the battery pack, the charging and discharging current and the total voltage of the battery pack in real time to protect the battery against overcharge or overdischarge, thereby prolonging the service life of the battery.

It should be understood that the energy storage unit management module 2011 described above is merely an illustrative example without any limitation to the present application. The energy storage unit management module 2011 in the embodiment of the present application may include any one of the management modules described above but is not limited to the above-mentioned management modules.

Optionally, in the embodiment of the present application, the temperature information includes the temperature rise rate of the energy storage unit 201.

The temperature rise rate of the energy storage unit 201 is the state information reflecting temperature variations of the energy storage unit 201 in an operating state. Whether the energy storage unit 201 has a risk of thermal runaway or not can be judged according to the temperature rise rate of the energy storage unit 201, the operating state of the non-energy storage unit 202 is adjusted accordingly, and safe operation of the energy storage system 200 is guaranteed.

Optionally, in the embodiment of the present application, the domain controller 203 is configured to determine the operating mode of the heat management unit according to the temperature rise rate of the energy storage unit 201.

Specifically, when the temperature of the energy storage unit rises abnormally (a temperature rise value is large within a short time), a refrigerating capacity of the heat management unit can be increased by increasing a rotation speed of a compressor, a rotation speed of a cooling fan, a flow velocity of a cooling liquid and other measures to increase a cooling speed of the energy storage unit; and correspondingly, when the temperature rise rate of the energy storage unit is small and the temperature of the energy storage unit is low, the refrigerating capacity of the heat management unit can be reduced properly, and even the heat management unit can made to stop cooling to increase the temperature rise rate of the energy storage unit.

The operating mode of the heat management unit is determined according to the temperature rise rate of the energy storage unit 201, i.e., the operating state of the heat management unit is adjusted reasonably according to the temperature rise rate of the energy storage unit 201 to enable the energy storage unit 201 to be in an appropriate operating condition and ensure efficient and safe operation of the energy storage system 200.

Optionally, in the embodiment of the present application, the domain controller 203 is configured to determine the operating mode of the fire-fighting unit according to the temperature rise rate of the energy storage unit 201 and the operating mode of the heat management unit.

In other words, in the case that a temperature rise value of the energy storage unit 201 within a short time is large and the situation that the temperature rise rate of the energy storage unit 201 is still not under control through the measures such as increasing the rotation speed of the compressor, the rotation speed of the cooling fan and the flow velocity of the cooling liquid when the heat management unit conducts full-power cooling, the fire-fighting unit is started to take part in adjusting the temperature of the energy storage unit 201.

The heat management unit adjusts the operating state of its own according to the temperature rise rate of the energy storage unit 201. When the heat management unit reaches a limit of adjusting the operating condition of the energy storage unit 201 and the energy storage unit 201 is not yet in an appropriate operating condition and even has a risk of thermal runaway, the fire-fighting unit changes the operating mode to take part in adjusting the operating condition of the energy storage unit 201 to protect the energy storage system 200 against safety problems such as thermal runaway.

Optionally, in the embodiment of the present application, the domain controller 203 is configured to: judge whether the temperature rise rate of the energy storage unit 201 is not less than the second threshold or not in the case that the temperature rise rate of the energy storage unit 201 is not less than the first threshold and lasts a certain period of time, the second threshold being greater than the first threshold; and determine the operating mode of the heat management unit to be a full power refrigeration mode in the case that the temperature rise rate of the energy storage unit 201 is not less than the second threshold.

Optionally, the first threshold is 0.01 °C/min-2 °C/min, the state duration when the temperature rise rate of the energy storage unit 201 is not less than the first threshold is 10 s-300 s, and the second threshold is 2 °C/min-10 °C/min. It should be understood that the above-mentioned ranges of values are only to illustrate the embodiment of the present application without any restriction to the present application, and actual parameters can be adjusted and set according to the actual operating state of the energy storage system.

In the case that the temperature rise rate of the energy storage unit continues to rise and is not less than the second threshold after the temperature rise rate of the energy storage unit 201 is not less than the first threshold and lasts a certain period of time, the heat management unit is determined to operate in a full power refrigeration mode to conduct cooling on the energy storage unit 201 fully to protect the energy storage system 200 against thermal runaway.

Optionally, in the embodiment of the present application, the domain controller 203 is configured to determine the operating mode of the fire-fighting unit to be a turn-off mode in the case that the operating mode of the heat management unit is a full power refrigeration mode and the temperature rise rate of the energy storage unit 201 is less than a third threshold, and the third threshold is greater than the second threshold, for example, the third threshold may be 10 °C/min-50 °C/min.

When the temperature rise rate of the energy storage unit 201 continues to rise but does not exceed the third threshold after the heat management unit conducts cooling on the energy storage unit 201 in a full power refrigeration mode, the fire-fighting unit is determined to be in a turn-off mode and does not take part in temperature adjustment on the energy storage unit 201, and the heat management unit continues to conduct cooling on the energy storage unit 201 in the full power refrigeration mode. In this way, in the case that the heat management unit can effectively adjust the temperature of the energy storage unit 201, the energy storage unit 201 can be protected against irreversible performance damage caused by unnecessarily starting the fire control system without starting the fire-fighting unit.

Optionally, in the embodiment of the present application, the domain controller 203 is configured to determine the operating mode of the fire-fighting unit to be a turn-on mode in the case that the operating mode of the heat management unit is a full power refrigeration mode and the temperature rise rate of the energy storage unit 201 is not less than a third threshold.

When the heat management unit conducts cooling on the energy storage unit in the full power refrigeration mode and the temperature rise rate of the energy storage unit 201 continues to rise and exceeds the third threshold, i.e., when the heat management unit operates in the full power refrigeration mode and still cannot effectively control the temperature rise rate of the energy storage unit 201, the fire control system is determined to be in the turn-on mode and takes part in adjusting the temperature of the energy storage unit to protect the energy storage system 200 against thermal runaway and safety problems.

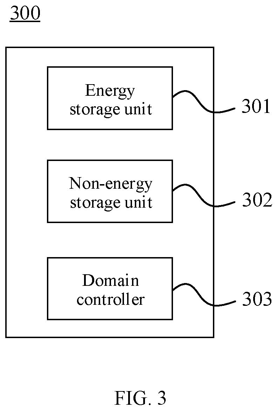

The present application further provides an energy storage system 300, as shown in FIG. 3, the energy storage system 300 includes an energy storage unit 301, a non-energy storage unit 302 and a domain controller 303.

The non-energy storage unit 302 is configured to assist the energy storage unit 301 and includes a heat management unit and a fire-fighting unit.

The domain controller 303 integrates an energy storage unit 301 management module and a non-energy storage unit 302 management module and is configured to manage the non-energy storage unit 302 according to state information of the energy storage unit 301.

In the embodiments of the present application, the energy storage unit 301 management module and the non-energy storage unit 302 management module are integrated into the domain controller 303. Compared with an existing solution that an energy storage unit 301 management module and a non-energy storage unit 302 management module of an energy storage system 300 are arranged in a decentralized manner, the solution of the present application that the energy storage unit 301 management module and the non-energy storage unit 302 management module are integrated into the domain controller 303 has the advantages that centralized control of the energy storage unit 301 management module and the non-energy storage unit 302 management module can be realized through the domain controller 303 so that the information exchange between the energy storage unit 301 management module and the non-energy storage unit 302 management module is smooth and fast, the system management efficiency is improved, and information of the energy storage unit 301 management module and information of the non-energy storage unit 302 management module can be integrated and processed to avoid wasting of system resources caused by repeated information processing. Particularly, after a fire-fighting unit management module and the energy storage unit 301 management module are integrated into the domain controller 303, the fire-fighting unit can acquire the state information of the energy storage unit 301 in time, and the domain controller 303 adjusts and controls the operating state of the energy storage unit in time to ensure the security of the energy storage system 300. In addition, the non-energy storage unit 302 is managed according to the state information of the energy storage unit 301, i.e., the operating state of the non-energy storage unit 302 is adjusted reasonably according to actual operation demands of the energy storage unit 301 to save the operating cost of the non-energy storage unit 302.

Optionally, in the embodiment of the present application, the state information of the energy storage system includes at least one of temperature information, voltage, insulation resistance value, state of charge (SOC) and state of health (SOH) of the energy storage unit of the energy storage system.

Optionally, in the embodiment of the present application, the energy storage unit 301 management module includes a battery management system (BMS) and/or an energy management system (EMS).

Optionally, in the embodiment of the present application, the temperature information includes the temperature rise rate of the energy storage unit 301.

Optionally, in the embodiment of the present application, the domain controller 303 is configured to determine the operating mode of the heat management unit according to the temperature rise rate of the energy storage unit 301.

Optionally, in the embodiment of the present application, the domain controller 303 is configured to determine the operating mode of the fire-fighting unit according to the temperature rise rate of the energy storage unit 301 and the operating mode of the heat management unit.

Optionally, in the embodiment of the present application, the domain controller 303 is configured to: judge whether the temperature rise rate of the energy storage unit 301 is not less than the second threshold or not in the case that the temperature rise rate of the energy storage unit 301 is not less than the first threshold and lasts a certain period of time, the second threshold being greater than the first threshold; and determine the operating mode of the heat management unit to be a full power refrigeration mode in the case that the temperature rise rate of the energy storage unit 301 is not less than the second threshold.

Optionally, in the embodiment of the present application, the domain controller 303 is configured to determine the operating mode of the fire-fighting unit to be a turn-off mode in the case that the operating mode of the heat management unit is a full power refrigeration mode and the temperature rise rate of the energy storage unit 301 is less than a third threshold, and the third threshold is greater than the second threshold.

Optionally, in the embodiment of the present application, the domain controller 303 is configured to determine the operating mode of the fire-fighting unit to be a turn-on mode in the case that the operating mode of the heat management unit is a full power refrigeration mode and the temperature rise rate of the energy storage unit 301 is not less than the third threshold.

Although the present application has been described with reference to preferred embodiments, various improvements can be made thereto and equivalents can be used for the replacement of members therein without departing from the scope of the present application. Most of all, on the premise of no structural conflict, the technical features mentioned in the embodiments can be combined in any way. The present application is not restricted to particular embodiments disclosed herein but comprises all the technical solutions falling in the scope of the claims.

## Claims

1. A domain controller for an energy storage system, wherein the energy storage system comprises an energy storage unit and a non-energy storage unit, the non-energy storage unit comprises a heat management unit and a fire-fighting unit, and the non-energy storage unit is configured to assist the energy storage unit; and
the domain controller integrates an energy storage unit management module and a non-energy storage unit management module and is configured to manage the non-energy storage unit according to state information of the energy storage unit.

2. The domain controller according to claim 1, wherein the state information comprises at least one of temperature information, voltage, insulation resistance value, state of charge (SOC) and state of health (SOH) of the energy storage unit of the energy storage system.

3. The domain controller according to claim 1 or 2, wherein the energy storage unit management module comprises a battery management system (BMS) and/or an energy management system (EMS).

4. The domain controller according to claim 2 or 3, wherein the temperature information comprises a temperature rise rate of the energy storage unit.

5. The domain controller according to claim 4, configured to:
determine an operating mode of the heat management unit according to the temperature rise rate of the energy storage unit.

6. The domain controller according to claim 5, configured to:
determine an operating mode of the fire-fighting unit according to the temperature rise rate of the energy storage unit and the operating mode of the heat management unit.

7. The domain controller according to any one of claims 4 to 6, configured to:
judge whether the temperature rise rate of the energy storage unit is not less than a second threshold or not in the case that the temperature rise rate of the energy storage unit is not less than a first threshold and lasts a certain period of time, the second threshold being greater than the first threshold; and
determine the operating mode of the heat management unit to be a full power refrigeration mode in the case that the temperature rise rate of the energy storage unit is not less than the second threshold.

8. The domain controller according to claim 7, configured to:
determine the operating mode of the fire-fighting unit to be a turn-off mode in the case that the operating mode of the heat management unit is the full power refrigeration mode and the temperature rise rate of the energy storage unit is less than a third threshold, the third threshold being greater than the second threshold.

9. The domain controller according to claim 7 or 8, configured to:
determine the operating mode of the fire-fighting unit to be a turn-on mode in the case that the operating mode of the heat management unit is the full power refrigeration mode and the temperature rise rate of the energy storage unit is not less than a third threshold, the third threshold being greater than the second threshold.

10. An energy storage system, comprising:
an energy storage unit;
a non-energy storage unit comprising a heat management unit and a fire-fighting unit, and the non-energy storage unit is configured to assist the energy storage unit; and
a domain controller which integrates an energy storage unit management module and a non-energy storage unit management module and is configured to manage the non-energy storage unit according to state information of the energy storage unit.

11. The energy storage system according to claim 10, wherein the state information comprises at least one of temperature information, voltage, insulation resistance value, state of charge (SOC) and state of health (SOH) of the energy storage unit of the energy storage system.

12. The energy storage system according to claim 10 or 11, wherein the energy storage unit management module comprises a battery management system (BMS) and/or an energy management system (EMS).

13. The energy storage system according to claim 11 or 12, wherein the temperature information comprises a temperature rise rate of the energy storage unit.

14. The energy storage system according to claim 13, wherein the domain controller is configured to:
determine an operating mode of the heat management unit according to the temperature rise rate of the energy storage unit.

15. The energy storage system according to claim 14, wherein the domain controller is configured to:
determine an operating mode of the fire-fighting unit according to the temperature rise rate of the energy storage unit and the operating mode of the heat management unit.

16. The domain controller according to any one of claims 13 to 15, wherein the domain controller is configured to:
judge whether the temperature rise rate of the energy storage unit is not less than a second threshold or not in the case that the temperature rise rate of the energy storage unit is not less than a first threshold and lasts a certain period of time, the second threshold being greater than the first threshold; and
determine the operating mode of the heat management unit to be a full power refrigeration mode in the case that the temperature rise rate of the energy storage unit is not less than the second threshold.

17. The domain controller according to claim 16, wherein the domain controller is configured to:
determine the operating mode of the fire-fighting unit to be a turn-off mode in the case that the operating mode of the heat management unit is the full power refrigeration mode and the temperature rise rate of the energy storage unit is less than a third threshold, the third threshold being greater than the second threshold.

18. The domain controller according to claim 16 or 17, wherein the domain controller is configured to:
determine the operating mode of the fire-fighting unit to be a turn-on mode in the case that the operating mode of the heat management unit is the full power refrigeration mode and the temperature rise rate of the energy storage unit is not less than a third threshold, the third threshold being greater than the second threshold.
